# EUROPÄISCHE PATENTSCHRIFT

(11) **EP 3 583 301 B1**
(45) Veröffentlichungstag und Bekanntmachung des Hinweises auf die Patenterteilung: **05.08.2020**
(21) Anmeldenummer: 18708405.8
(22) Anmeldetag: 01.03.2018
(51) Int. Cl.: F01L 3/14

(54) **VERFAHREN ZUR HERSTELLUNG EINES VENTILKÖRPERS EINES HOHLRAUMVENTILS MIT OPTIMIERTEN SCHAFTINNENGEOMETRIE UND HOHLRAUMVENTIL**
METHOD FOR PRODUCING A VALVE BODY OF A CAVITY VALVE WITH OPTIMIZED SHAFT INTERIOR GEOMETRY AND CAVITY VALVE
PROCÉDÉ DE FABRICATION D'UN CORPS DE VALVE D'UNE SOUPAPE CREUSE À GÉOMÉTRIE INTÉRIEURE DE LA TIGE OPTIMISÉE ET SOUPAPE CREUSE

(30) Priorität: 29.06.2017 DE 102017114509
(43) Veröffentlichungstag der Anmeldung: 25.12.2019
(73) Patentinhaber: Federal-Mogul Valvetrain GmbH, 30890 Barsinghausen (DE)
(72) Erfinder: MATTHIAS, Thorsten, 30826 Garbsen (DE); WOLKING, Antonius, 30890 Barsinghausen (DE); HEINEK, Andreas, 01728 Bannewitz (DE); BAYARD, Guido, 44369 Dortmund (DE)
(74) Vertreter: Becker & Kurig Partnerschaft Patentanwälte PartmbB
(86) Internationale Anmeldenummer: PCT/EP2018/055048
(87) Internationale Veröffentlichungsnummer: WO 2019/001780

(56) Entgegenhaltungen:
- EP-A1- 2 690 262
- EP-A1- 2 690 262
- CN-U- 202 900 355
- CN-U- 202 900 355
- CN-U- 205 154 285
- CN-U- 205 154 285
- DE-A1- 10 118 032
- DE-A1- 10 118 032
- JP-A- 2009 138 594
- JP-A- 2009 138 594
- JP-A- 2011 179 390
- JP-A- 2011 179 390
- JP-A- 2014 084 725
- JP-A- 2014 084 725
- JP-A- 2014 166 644
- JP-A- 2014 166 644
- JP-U- H0 352 309
- JP-U- H0 352 309
- JP-U- S63 171 605
- JP-U- S63 171 605

## Beschreibung

### Gebiet der Erfindung

Die vorliegende Erfindung betrifft ein Verfahren zur Herstellung von Hohlraumventilen für Verbrennungsmotoren und mit dem Verfahren hergestellte Hohlraumventile. Insbesondere betrifft die vorliegende Erfindung Hohlraumventile mit optimierter Schaftinnengeometrie, welche zu einer verbesserten internen Kühlung führt.

### Stand der Technik

Ein- und Auslassventile sind bei Verbrennungsmotoren thermisch und mechanisch hoch beanspruchte Bauteile. Eine ausreichende Kühlung ist daher notwendig, um einer dauerhafte Funktionsfähigkeit der Ventile sicherzustellen. Hierbei sind Hohlraumventile gegenüber Vollschaftventilen und Hohlschaftventilen vorteilhaft, da ein Hohlraum sowohl im Schaft als auch im Ventilkopf vorhanden ist, wodurch eine verbesserte interne Kühlung erzielt werden kann. Weitere Vorteile sind ein geringeres Gewicht, die Vermeidung von Hot-Spots und eine CO₂-Reduzierung. Die Kühlung kann weiter verbessert werden, indem die Schaftinnengeometrie optimiert wird, um den Wärmetransport sowohl innerhalb des Hohlraums, d.h. durch eine sich darin befindliches Kühlmedium, als auch zwischen Ventilwand und Kühlmedium zu erhöhen. Bekannt ist hier z.B. die Verwendung von Einsätzen, die über die gebohrte Tellerfläche in den Schaft eingesetzt werden; vgl. DE 10057192 B4.

Hergestellt werden Hohlraumventile üblicherweise durch eine Kombination verschiedener Verfahren, wie z.B. Schmieden, Drehen und Schweißen. Hierbei ist insbesondere das Drehen oder Fräsen des Hohlraumes kostenintensiv. Auch sollten Schweißpunkte an der Tellerfläche oder an anderen betriebsbedingt kritischen Stellen vermieden werden. Ein weiterer Nachteil bekannter Verfahren ist, dass oftmals eine große Anzahl von Prozessschritten notwendig ist. Beispielsweise betrifft die US 6006713 A ein Hohlraumventil, das durch Schließen eines hohlen Rohlings mittels Schweißens hergestellt wird.

Weitere Beispiele für innengekühlte Ventile sind aus den Patentdokumenten JP 2014084725 A, JP 2011179390 A, JP 2009138594 A, JP H03 52309 U, JP S63 171605 U, CN 202900355 U, CN 205154285 U, JP 2014166644 A und EP 2690262 A1 bekannt. Diese Dokumente offenbaren verschiedene Herstellungsverfahren für innengekühlte Ventile durch Umformen. Ein Teil dieser Dokumente offenbart ebenfalls Strukturen im Inneren eines Ventilhohlraums sind, die eine Wärmeübertragung zwischen einem Kühlmittel und dem Ventilkörper verbessern sollen.

Aufgabe der vorliegenden Erfindung ist es ein Hohlraumventil mit optimierter Schaftinnengeometrie und ein Verfahren zu dessen Herstellung bereitzustellen, welches die genannten Nachteile nicht aufweist und eine hohe Produktivität und gute Materialausnutzung aufweist.

### Zusammenfassung der Erfindung

Ein Hohlraumventil mit optimierter Schaftinnengeometrie umfasst einen Ventilkörper mit einem Ventilkopf und einem Ventilschaft, wobei der Ventilschaft mit einem sich entlang einer Längsachse des Ventilschafts erstreckenden Ventilschaft-Hohlraum versehen ist, wobei eine Innenfläche des Ventilschafts mit einer oberflächenvergrößernden Strukturierung versehen ist.

Gemäß einem Aspekt kann die Strukturierung an der Innenfläche angeordnete Rippen umfassen.

Gemäß einem weiteren Aspekt können die Rippen schräg relativ zu der Längsachse verlaufen.

Gemäß einem weiteren Aspekt kann die Höhe der Rippen einer axialen Richtung variieren.

Gemäß einem weiteren Aspekt kann die Strukturierung getrennt voneinander angeordnete Vertiefungen in der Innenfläche umfassen.

Gemäß einem weiteren Aspekt kann die Strukturierung aneinanderliegend angeordnete Waben umfassen.

Gemäß einem weiteren Aspekt kann die Innenfläche mehrere Bereiche mit voneinander verschiedenen Strukturierungen umfassen.

Die Aufgabe wird gelöst durch ein Verfahren zur Herstellung eines Ventilkörpers eines Hohlraumventils gemäß Anspruch 1.

Gemäß einem weiteren Aspekt er vorliegenden Erfindung kann das Verfahren Bereitstellen des napfförmigen Halbzeugs umfassen: Bereitstellen eines zumindest teilweise zylindrischen Rohlings und
Formen des napfförmigen Halbzeugs aus dem Rohling.

Gemäß einem weiteren Aspekt des Verfahrens kann das Formen des napfförmigen Halbzeugs durch ein Warmumformverfahren erfolgen, insbesondere durch Napfrückwärtsfließpressen oder Schmieden.

Gemäß einem weiteren Aspekt des Verfahrens kann das Formen des Ventilkopfes durch ein Warmumformverfahren erfolgen, insbesondere durch Napfrückwärtsfließpressen oder Schmieden.

Gemäß einem weiteren Aspekt des Verfahrens kann das Längen der ringförmigen Seitenwand durch Rundkneten mit Dorn oder Abstreckgleitziehen über einen Dorn erfolgen.

Gemäß einem weiteren Aspekt des Verfahrens kann die Strukturierung des Dorns Nuten in der Außenfläche des Dorns, voneinander getrennte Erhöhungen auf der Außenfläche des Dorns oder eine wabenförmige Strukturierung aus Erhöhungen und Vertiefungen an der Außenfläche des Dorns umfassen.

Gemäß der Erfindung werden beim Längen der ringförmigen Wand mehrere Dorne unterschiedlicher Durchmesser mit aufeinanderfolgend abnehmenden Durchmessern verwendet, wobei zumindest der zuletzt verwendete Dorn eine Außenfläche mit Strukturierung aufweist.

Gemäß einem weiteren Aspekt kann das Verfahrens weiterhin umfassen: Einfüllen eines Kühlmediums, insbesondere Natrium, in den zylindrischen Hohlraum und Schließen des Ventilschafts.

Weiter wird die Aufgabe gelöst durch ein Hohlraumventil mit optimierter Schaftinnengeometrie umfassend einen Ventilkörper hergestellt unter Verwendung des vorstehenden Verfahrens.

### Kurze Beschreibung der Zeichnung

Im Folgenden werden beispielhafte Ausführungsformen der Erfindung unter Bezug auf die Figuren genauer beschrieben, wobei
Figuren 1A - 1F verschiedene Zwischenschritte der erfindungsgemäßen Herstellung eines Ventilkörpers eines Hohlraumventils (dargestellt in Fig. 1F) aus einem Rohling (dargestellt in Fig. 1A) zeigen;
Fig. 2A eine Schnittansicht eines erfindungsgemäßen Ventilschafts zeigt;
Fig. 2B eine teilweise Abwicklung der Innenfläche des Ventilschafts der in Fig. 2A dargestellten Ausführungsform zeigt;
Figuren 3A - 3C teilweise Abwicklungen der Innenfläche des jeweiligen Ventilschafts weiterer erfindungsgemäßer Ausführungsformen zeigen; und
Fig. 4 eine teilweise Abwicklung einer Innenfläche eines Ventilschafts mit zwei unterschiedlichen Strukturierungen zeigt.

### Ausführliche Beschreibung der Erfindung

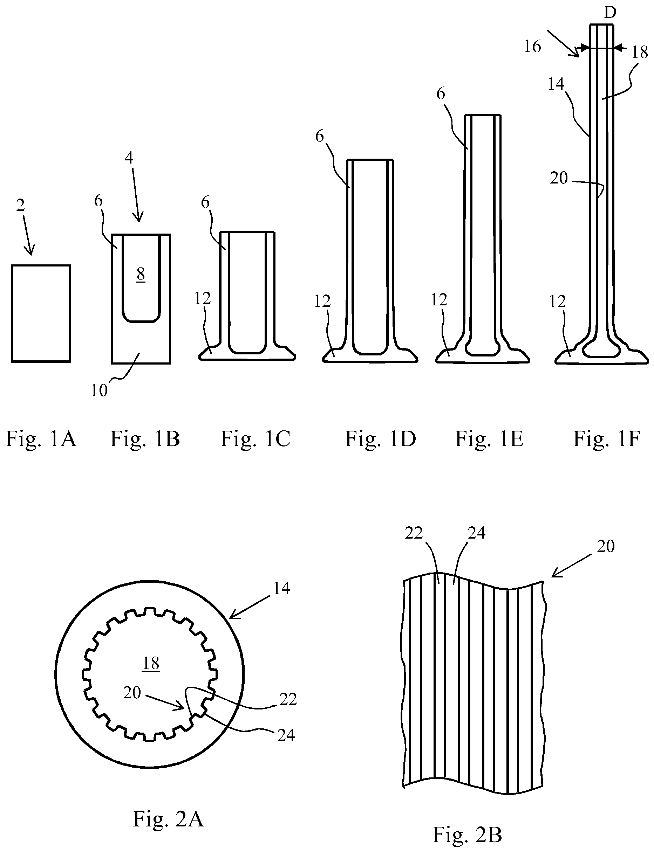

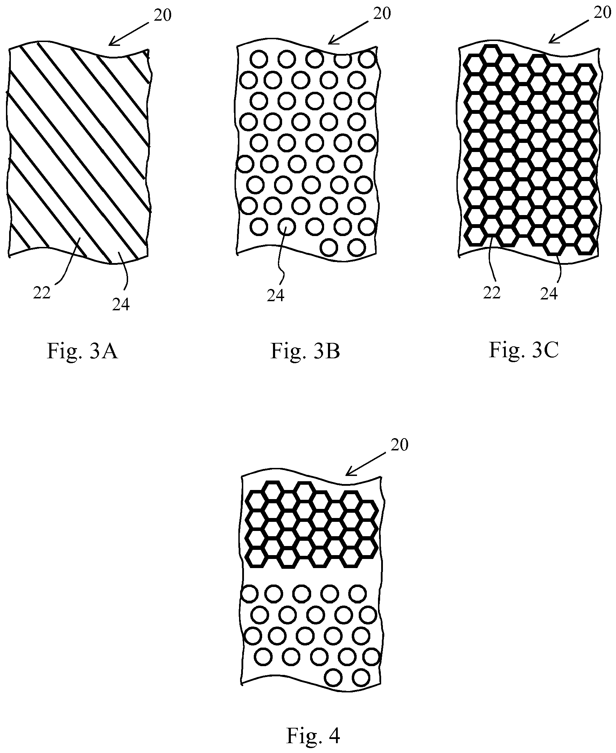

In den Figuren 1F und 2A sind eine axiale Schnittansicht, d.h. eine Längsachse eines Ventilschafts 14 liegt in der Schnittebene, und eine radiale Schnittansicht, d.h. die Schnittebene ist orthogonal zur Längsachse, eines erfindungsgemäßen Hohlraumventils bzw. dessen Ventilkörpers 16 dargestellt (die Längsachse des Ventils definiert eine axiale Richtung). Der Ventilkörper 16 des Hohlraumventils umfasst einen Ventilkopf 12 und einen Ventilschaft 14 mit Außendurchmesser D, wobei sich im Ventilschaft 14 ein Ventilschaft-Hohlraum 18 in Form eines zur Längsachse parallel verlaufenden Hohlraums befindet. Eine Innenfläche 20 des Ventilschafts 14, d.h. eine Grenzfläche zwischen Ventilschaft-Hohlraum und Ventilschaft-Wand, ist mit einer oberflächenvergrößernden Strukturierung versehen. Ein Beispiel für eine solche Strukturierung ist in Fig. 2A zu sehen, in der Rippen, die parallel zur Längsachse verlaufen, an der Innenfläche 20 angeordnet sind. Außer Rippen sind auch andere Strukturierungsmöglichkeiten gegeben, auf weitere Beispiele wird unten im Zusammenhang mit den Figuren 3A-3C eingegangen wird.

Durch die oberflächenvergrößernde Strukturierung wird die Wärmeübertragung zwischen der Wand des Ventilschafts und einer Kühlflüssigkeit bzw. einem Kühlmedium in dem Ventilschaft-Hohlraum erhöht. Die interne Kühlung kann also verbessert werden und die Bildung von Hotspots vermieden werden, dies führt wiederum zu einem verbesserten Motorbetrieb. Man hat also ein Hohlraumventil mit optimierter Innenraumgeometrie.

Die oberflächenvergrößernde Strukturierung erfasst einen gewissen Tiefenbereich der Wand des Ventilschafts 14, der durch erhöhte Bereiche, bezeichnet als Erhöhungen 22 (Rippen in Fig. 2A), und vertiefte Bereiche, bezeichnet als Vertiefungen 24, gekennzeichnet ist. ,Höher' bzw. ,tiefer' - und entsprechend ,Höhe' bzw. ,Tiefe' - beziehen sich hier auf die von der Wand des Ventilschafts aus gesehene Ausdehnung. Höhere Bereiche (Erhöhungen) erstrecken sich also radial weiter nach innen als tiefere Bereiche (Vertiefungen). Da im Allgemeinen keine ausgezeichnete "Bezugsebene" vorhanden ist, sind 'höher' und ,tiefer' also relativ zueinander zu verstehen. Die Übergänge zwischen Erhöhungen und Vertiefungen können - anders als die steilen Übergänge (Flanken) in radialer Richtung in Fig. 2A - glatt und/oder gekrümmt verlaufen. Ausgehend von den Übergängen der Strukturierung in Fig. 2A kann durch eine Glättung der Stufen z.B. eine Wellenform in Umfangrichtung erhalten werden.

Figuren 2B und 3A-3C zeigen in Teilabwicklungen der Innenfläche 20 des Ventilschafts 14 beispielhafte Strukturierungsmöglichkeiten der Innenfläche des Ventilschafts. Dabei sind die Strukturierungen der Innenfläche 20 des Ventilschafts 14 lediglich skizziert angedeutet; insbesondere bedecken sie in einigen Figuren (Fig. 3B, Fig. 3C, Fig. 4) den dargestellten Flächenausschnitt nicht vollständig, was der zeichnerischen Vereinfachung dienen soll und nicht implizieren soll, dass sich die Strukturierungen nicht über die gesamte Innenfläche des Ventilschafts oder beliebige Teilbereiche derselben erstrecken können.

Gemäß einer bereits oben erwähnten bevorzugten Ausführungsform sind an der Innenfläche 20 des Ventilschafts 14 in axiale Richtung verlaufende Rippen angeordnet. Die Erhöhungen 22 liegen hier also in Form von Rippen vor; die Vertiefungen 24 entsprechen den zwischen den Rippen liegenden Bereichen (Rillen, Nuten). Fig. 2A zeigt hierzu eine Schnittansicht des Ventilschafts 14; Fig. 2B zeigt eine Teilansicht einer Abwicklung der Innenfläche 22 des Ventilschafts. Um die Figuren übersichtlich zu halten ist jeweils nur eine Erhöhung 22 bzw. eine Vertiefung 24 mit einem Bezugszeichen versehen; dies gilt auch für die Figuren 3A-3C.

Die Anzahl der Rippen bzw. Erhöhungen kann entsprechend der Dimension des Ventils festgelegt werden; bevorzugt sind 10 - 50 Rippen in Umfangrichtung angeordnet, weiter bevorzugt 20 - 25 Rippen. Es ist weiter möglich, die Höhe verschiedener Rippen und/oder innerhalb einer Rippe zu variieren (in den Figuren nicht dargestellt). Z.B. können sich höhere und weniger hohe Rippen in Umfangrichtung abwechseln oder die Höhe der Rippen kann in axialer Richtung variieren, etwa vom Ventilkopf in Richtung Schaftende abnehmen.

Die in Fig. 3A dargestellte Ausführung ist derjenigen der Figuren 2A und 2B sehr ähnlich, mit dem Unterschied, dass die Erhöhungen 22, d.h. die Rippen, nicht parallel zur Axialrichtung (Längsrichtung) verlaufen, sondern schräg dazu angeordnet sind. Es ergibt sich also die Form eines Innengewindes. Da oben bei den Figuren 2A und 2B bezüglich der Anzahl der Rippen und der Höhe bzw. Höhenvariation gesagte gilt auch hier.

Eine weitere Gestaltungsmöglichkeit der Strukturierung besteht darin, dass die Innenfläche des Ventilschafts im Wesentlichen die Form einer (Kreis-)Zylinderoberfläche aufweist, von der aus sich mehrere voneinander getrennt angeordnete Vertiefungen radial nach außen in die Ventilschaft-Wand erstrecken. Dies ist beispielhaft in Fig. 3B dargestellt, in welcher sich kreisförmige Vertiefungen 24 in der Innenfläche 20 des Ventilschafts befinden. Insgesamt, d.h. in einer 3D-Ansicht, können die Vertiefungen 24 die Form eines Kugelabschnitts aufweisen. Andere, anstelle der Kreisform, mögliche Formen der Vertiefungen sind in der Draufsicht z.B. elliptisch, rechteckig oder viereckig. Auch die Formgebung in der Tiefe (anstelle des Kugelabschnitts) kann unterschiedlich gestaltet sein, z.B. kreisförmig, elliptisch, rechteckig oder viereckig. Eine Vertiefung die in der Draufsicht kreisförmig und in der Tiefenformgebung rechteckig ist, entspricht dann in ihrer Form einem in axialer Richtung in die Ventilschaft-Wand gedrückten Kreiszylinder, während eine Vertiefung die in der Draufsicht rechteckig und in der Tiefenformgebung kreisrund ist, in ihrer Form einem in radialer Richtung in die Ventilschaft-Wand gedrückten Kreiszylinder entspricht (hier sind 'axial' und 'radial' auf die entsprechenden Richtungen des zu drückenden Kreiszylinders bezogen). Beliebige andere Kombinationen der obig aufgezählten Draufsicht-Formen und Tiefenformgebungen sind ebenso möglich.

In Fig. 3C ist beispielhaft eine wabenförmige Strukturierung aneinanderliegender Waben (Sechsecke) dargestellt. Hierbei sind die Erhöhungen 22 als etwas dickere Linien eingezeichnet. Die Vertiefungen 24 sind von diesen Erhöhungen umgeben. Der Übergang zwischen Erhöhungen und Vertiefungen erfolgt bevorzugt nicht in scharfkantiger Form, sondern abgerundet. Die in der Figur dargestellte Fläche entspricht dann in etwa der Oberfläche eines Golfballs. Allgemeiner können die ,Waben' auch eine nicht-sechseckige Form aufweisen, z.B. quadratisch oder rechteckig. Jedoch sollte durch Aneinanderlegen dieser Waben eine flächendeckende Strukturierung erhalten werden, wobei hierfür gegebenenfalls unterschiedlich geformte Waben Verwendung finden können.

Auch bei den in den Figuren 3B und 3C beispielhaft dargestellten Ausführungen können Anzahl, Größe und Höhe/Tiefe der Erhöhungen bzw. Vertiefungen entsprechend der Dimensionen des Ventils und der gewünschten Ventil-Eigenschaften (insbesondere Wärmeübertragungseigenschaften) gestaltet werden. Weiter ist eine Variation der Höhe/Tiefe der Erhöhungen bzw. Vertiefungen zwischen verschiedenen Bereichen der Innenfläche des Ventilschafts denkbar.

Weiter ist es denkbar, dass die Innenfläche des Ventilschafts mehrere Bereiche aufweist, die mit voneinander verschiedenen Strukturierungen versehen sind. Dies ist beispielhaft in Fig. 4 dargestellt, in welcher die Strukturierungen der Figuren 3B und 3C in zwei verschiedenen Bereichen angeordnet sind.

Die Herstellung eines obig beschriebenen Hohlraumventils mit optimierter Innenraumgeometrie, d.h. mit Strukturierung an der Innenfläche des Ventilschafts, erfolgt erfindungsgemäß mit dem im Folgenden erläuterten Verfahren.

Hierzu sind in den Figuren 1A bis 1F, in axialen Schnittansichten, verschiedene Zwischenstufen des Herstellungsverfahrens dargestellt. Bevorzugt dient als Ausgangspunkt, siehe Fig. 1A, ein Rohling 2 aus einem dem Fachmann bekannten Ventilstahl. Der Rohling weist eine zumindest teilweise zylindrische Form auf, bevorzugt eine kreiszylindrische Form, entsprechend der Kreisform des herzustellenden Ventilkörpers bzw. Ventils.

Der Rohling 2 wird in ein in Fig. 1B dargestelltes napfförmiges Halbzeug 4 bzw. Werkstück umgeformt. Das Halbzeug in Form eines Napfes umfasst einen Bodenabschnitt 10, aus dem später ein Ventilkopf (bzw. Ventilteller) 12 gebildet wird, und eine ringförmige Wand 6, die einen zylindrischen, bevorzugt kreiszylindrischen, Hohlraum 8 des napfförmigen Halbzeugs 4 umgibt und aus der später ein Ventilschaft 14 gebildet wird. Hierbei kann während der nachfolgenden Umformschritte eventuell Material zwischen Bodenabschnitt 10 und ringförmiger Wand 6 fließen. Allgemeiner wird erfindungsgemäß das napfförmige Halbzeug 4 direkt bereitgestellt; das Verfahren startet dann also mit Bereitstellen des in Fig. 1B dargestellten napfförmigen Halbzeugs 4.

In einem anschließenden Umformschritt wird aus dem Bodenabschnitt 10 der Ventilkopf 12 geformt. Das dadurch erhaltene Werkstück ist in Fig. 1C dargestellt.

Sowohl das Umformen des Rohlings 2 in ein napfförmiges Werkstück 4 als auch das Formen des Ventilkopfs 12 aus dem Bodenabschnitt 10 wird bevorzugt durch ein Warmumformverfahren durchgeführt; weiter bevorzugt wird Napfrückwärtsfließpressen oder Schmieden verwendet. Beim Napfrückwärtsfließpressen wird ein Stempel in den Rohling 2 gepresst, um den Hohlraum 8 zu formen.

Im nächsten Bearbeitungsschritt wird eine axiale Länge der ringförmigen Wand 6 vergrößert. 'Axial' bezieht sich auf die durch den Schaft definierte Längsrichtung, also auf die Achse der ringförmigen Wand; ,radial' ist entsprechend eine Richtung orthogonal zur axialen Richtung. Um eine effektive Längenzunahme zu erreichen wird während dieses Schrittes ein Dorn (nicht dargestellt) in den Hohlraum eingesetzt, so dass ein Fließen des Materials in radiale Richtung unterbunden wird und der Materialfluss vor allem in axialer Richtung stattfindet. Innendurchmesser und Wandstärke der ringförmigen Wand 6 können dadurch auf einen gewünschten Wert eingestellt werden. Weiter kann dieser Umformschritt aus mehreren Teilschritten bestehen, bei denen gegebenenfalls mehrere Dorne mit der Reihe nach abnehmenden Durchmessern eingesetzt werden. Die damit erreichten Halbzeug-Formen sind beispielhaft in Fig. 1D und Fig. 1E dargestellt, wo zunächst ein Dorn mit größerem Durchmesser verwendet wird um den in Fig. 1D dargestellten Halbzeug-Zustand zu erhalten und nachfolgend ein Dorn mit einem kleineren Durchmesser verwendet wird um den in Fig. 1E dargestellten Zustand zu erhalten. Selbstverständlich ist auch die Verwendung von mehr als zwei Dornen mit unterschiedlichen Durchmessern möglich.

Der Dorn, beziehungsweise, falls mehrere Dorne verwendet werden, zumindest der zuletzt verwendete Dorn, weist dabei an seiner Außenoberfläche eine Strukturierung auf, die komplementär zu der gewünschten oberflächenvergrößernden Strukturierung der Innenfläche 20 des Ventilschafts 14 ist. Da durch das Rundkneten das Material (auch) radial nach innen fließt wird die Strukturierung von der Außenfläche des Dorns auf die Innenfläche des Ventilschafts übertragen und dieser eingeprägt. Insbesondere kann die Außenoberfläche des Dorns komplementär zu den obig im Zusammenhang mit den Figuren 2B und 3A-3C beschriebenen Strukturierungen sein, d.h. der Dorn kann an der Außenfläche Vertiefungen (in Form von Rillen bzw. Nuten) aufweisen, die komplementär zu Rippen sind (Fig. 2B, Fig. 3A), Erhöhungen aufweisen, die komplementär zu Vertiefungen sind (genauer voneinander getrennte Erhöhungen im Zusammenhang mit Fig. 3B), oder eine wabenförmige Strukturierung mit Erhöhungen und Vertiefungen aufweisen, die komplementär zu einer Wabenstrukturierung ist (Fig. 3C).

Als Umformverfahren für dieses Längen bzw. diese Längung kommt bevorzugt Rundkneten mit Dorn oder Abstreckgleitziehen über einem Dorn zur Anwendung.

Abschließend wird der Außendurchmesser der ringförmigen Wand 6 durch Rundkneten reduziert, um einen fertiggestellten Ventilkörper 16 mit Ventilschaft-Hohlraum 18 zu erhalten, wobei der Ventilschaft 12 einen vorbestimmten Außendurchmesser D aufweist, d.h. einen gewünschten Zieldurchmesser aufweist; vgl. Fig. 1F. Dieser Umformschritt erfolgt ohne eingesetzten Dorn, damit der Durchmesser effektiv verkleinert werden kann und damit die zuvor in die Innenfläche 20 des Ventilschafts 14 eingeprägte Strukturierung nicht zerstört wird. Dieser Schritt führt, neben einer Verringerung des Außendurchmessers, auch zu einer weiteren Längung der ringförmigen Wand 6 und, da ohne Dorn, zu einer Zunahme der Wandstärke der ringförmigen Wand. Die Wandstärke ist also gegebenenfalls im vorhergehenden Längungsschritt etwas kleiner einzustellen, um unter Berücksichtigung der Dickenzunahme im abschließenden Schritt eine vorbestimmte Wandstärke, und damit bei gegebenen Außendurchmesser D einen bestimmten Innendurchmesser, zu erhalten. Ebenso kann sich die zuvor eingeprägte Strukturierung etwas ändern. Um eine vorbestimmte Strukturierung der Innenfläche des Ventilschafts zu erhalten, ist also die Außenflächen-Strukturierung des im vorherigen Schritt verwendeten Dorns so zu wählen, dass diese Änderung der eingeprägten Strukturierung kompensiert wird.

Wichtig ist hierbei, dass nach dem Rundkneten zur Reduzierung des Außendurchmessers der ringförmigen Wand 6 kein weiterer Umformschritt des Ventilkörpers 16 stattfindet, da dies die durch das Rundkneten erhaltenen positiven Materialeigenschaften verschlechtern würde und auch die Strukturierung der Innenfläche des Ventilschafts zerstören könnte. Rundkneten ist also der abschließende Umformschritt. Beim Rundkneten handelt es sich um ein inkrementelles Druckumformverfahren, bei dem in schneller Abfolge von verschiedenen Seiten in radialer Richtung auf das zu bearbeitende Werkstück eingehämmert wird. Durch den dadurch entstehenden Druck 'fließt' das Material sozusagen und die Materialstruktur wird nicht durch Zugspannungen verzerrt. Bevorzugt wird Rundkneten als Kaltumformverfahren, d.h. unterhalb der Rekristallisationstemperatur des bearbeiteten Materials, ausgeführt.

Wesentlicher Vorteil der Verwendung von Rundkneten als abschließenden Umformschritt ist also, dass beim Rundkneten durch die radiale Krafteinleitung Druckspannungen induziert werden, wodurch das Auftreten von Zugspannungen, welche die Anfälligkeit für Risse erhöhen verhindert wird, insbesondere trifft dies für die Randschichten des Hohlschaftes zu. Solche unerwünschten Zugspannungen treten z.B. bei der Verwendung von Ziehverfahren oder "Necking" (Einziehen, Durchmesserverminderung durch Einschnüren) auf. Rundkneten ermöglicht unter anderem einen ununterbrochenen Faserverlauf im Werkstück. Weitere Vorteile des Rundknetens als abschließenden Umformschritt - gegenüber Ziehverfahren oder "Necking" - sind durch eine bessere erreichbare Flächenqualität und durch eine relativ höhere Durchmesserreduzierung des Schaftes je Schritt gegeben. Aufgrund der hohen erreichbaren Flächenqualität und dadurch, dass beim die einhaltbaren Toleranzen beim Rundkneten sehr klein sind, ist eine Nachbearbeitung des Ventilschafts meist nicht notwendig. Mit Freiformverfahren bzw. Stauchverfahren - wie z.B. Necking - lässt sich im Allgemeinen nur eine schlechtere Flächenqualität bzw. Toleranzeinhaltung erreichen. Dementsprechend erfolgt nach dem Rundkneten zur Reduzierung des Außendurchmessers der ringförmigen Wand insbesondere kein Verfahrensschritt mittels eines Ziehverfahrens oder Neckings.

Um den Herstellungsprozess des Hohlraumventils abzuschließen kann weiterhin ein Kühlmedium, z.B. Natrium, über das nach außen offene Ende des Ventilschafts in den Hohlraum des Ventilkörpers eingefüllt werden und anschließend dieses Ende des Ventilschafts verschlossen werden, z.B. durch ein Ventilschaftendstück, welches, etwa mittels Reibschweißen oder einem anderen Schweißverfahren, angebracht wird (in den Figuren nicht dargestellt).

### Bezugszeichenliste

- 2: Rohling
- 4: napfförmiges Halbzeug
- 6: ringförmige Wand
- 8: zylindrischer Hohlraum
- 10: Bodenabschnitt
- 12: Ventilkopf
- 14: Ventilschaft
- 16: fertiggestellter Ventilkörper
- 18: Ventilschaft-Hohlraum
- 20: Innenfläche des Ventilschafts mit Strukturierung
- 22: Erhöhungen
- 24: Vertiefungen
- D: Ventilschaft-Außendurchmesser

## Patentansprüche

1. Verfahren zur Herstellung eines Ventilkörpers eines Hohlraumventils mit optimierter Schaftinnengeometrie umfassend die folgenden Schritte:
Bereitstellen eines napfförmigen Halbzeugs (4), wobei das Halbzeug eine ringförmige Wand (6), die einen zylindrischen Hohlraum (8) des Halbzeugs umgibt, und einen Bodenabschnitt (10) aufweist;
Formen eines Ventilkopfes (12) aus dem Bodenabschnitt (10);
Längen der ringförmigen Wand (6) in einer axialen Richtung durch Umformen, wobei während des Umformens ein Dorn in den zylindrischen Hohlraum (8) eingesetzt wird, wobei eine Außenfläche des Dorns eine Strukturierung aufweist;
Reduzieren eines Außendurchmessers der ringförmigen Wand (6) durch Rundkneten ohne Dorn, um einen Ventilschaft (14) des fertiggestellten Ventilkörpers (16) mit vorbestimmtem Außendurchmesser (D) zu erhalten,
wobei
beim Längen der ringförmigen Wand mehrere Dorne unterschiedlicher Durchmesser mit aufeinanderfolgend abnehmenden Durchmessern verwendet werden und wobei zumindest der zuletzt verwendete Dorn eine Außenfläche mit Strukturierung aufweist.

2. Verfahren gemäß Anspruch 1, wobei das Bereitstellen des napfförmigen Halbzeugs (4) umfasst:
Bereitstellen eines zumindest teilweise zylindrischen Rohlings (2); und
Formen des napfförmigen Halbzeugs (4) aus dem Rohling (2).

3. Verfahren gemäß Anspruch 2, wobei das Formen des napfförmigen Halbzeugs (4) durch ein Warmumformverfahren erfolgt, insbesondere durch Napfrückwärtsfließpressen oder Schmieden.

4. Verfahren gemäß einem der Ansprüche 1 - 3, wobei das Formen des Ventilkopfes (12) durch ein Warmumformverfahren erfolgt, insbesondere durch Napfrückwärtsfließpressen oder Schmieden.

5. Verfahren gemäß einem der Ansprüche 1 - 4, wobei das Längen der ringförmigen Seitenwand (6) durch Rundkneten mit Dorn oder Abstreckgleitziehen über einen Dorn erfolgt.

6. Verfahren gemäß einem der Ansprüche 1 - 5, wobei die Strukturierung des Dorns Nuten in der Außenfläche des Dorns, voneinander getrennte Erhöhungen auf der Außenfläche des Dorns oder eine wabenförmige Strukturierung aus Erhöhungen und Vertiefungen an der Außenfläche des Dorns umfasst.

7. Verfahren gemäß einem der Ansprüche 1 - 6, weiterhin umfassend:
Einfüllen eines Kühlmediums, insbesondere Natrium, in den zylindrischen Hohlraum;
und Schließen des Ventilschafts.

8. Hohlraumventil mit optimierter Schaftinnengeometrie umfassend einen Ventilkörper, hergestellt unter Verwendung des Verfahrens gemäß einem der Ansprüche 1 - 7.

## Claims

1. A method for manufacturing a valve body of a cavity valve with optimized shaft interior geometry, comprising the following steps:
providing a bowl-shaped semi-finished product (4), wherein the semi-finished product has an annular wall (6), that surrounds a cylindrical cavity (8) of the semi-finished product, and a base portion (10);
forming a valve head (12) from the base portion (10);
lengthening the annular wall (6) in an axial direction by forming, wherein a mandrel is inserted into the cylindrical cavity (8) during the forming, wherein an outer surface of the mandrel has a structuring;
reducing an outer diameter of the annular wall (6) by rotary swaging without mandrel to obtain a valve stem (14) of the finished valve body (16) having predetermined outer diameter (D),
wherein multiple mandrels of different diameters, having successively decreasing diameters, are used during lengthening of the annular wall and wherein at least the last used mandrel has an outer surface with structuring.

2. The method according to claim 1, wherein the providing of the bowl-shaped semi-finished product (4) comprises:
providing an at least partly cylindrical blank (2); and
forming the bowl-shaped semi-finished product (4) from the blank (2).

3. The method according to claim 2, wherein the forming of the bowl-shaped semi-finished product (4) is carried out by a hot forming method, in particular by bowl backward extruding or forging.

4. The method according to one of claims 1 - 3, wherein the forming of the valve head (12) is carried out by a hot forming method, in particular by bowl backward extruding or forging.

5. The method according to one of claims 1 - 4, wherein the lengthening of the annular side wall (6) is carried out by rotary swaging with mandrel or ironing over a mandrel.

6. The method according to one of claims 1 - 5, wherein the structuring of the mandrel comprises grooves in the outer surface of the mandrel, elevations on the outer surface of the mandrel separated from one another or a honeycombed structuring made of elevations and recesses at the outer surface of the mandrel.

7. The method according to one of Claims 1 - 6, further comprising:
filling in a coolant into the cylindrical cavity, in particular sodium; and
closing the valve stem.

8. A cavity valve, having optimized shaft interior geometry, comprising a valve body, manufactured using the method according to one of Claims 1 - 7.

## Revendications

1. Procédé de fabrication d'un corps de soupape d'une soupape creuse à géométrie intérieure de la tige optimisée, comprenant les étapes suivantes :
la fourniture d'un demi-produit (4) en forme de godet, le demi-produit présentant une paroi annulaire (6) entourant une cavité cylindrique (8) du demi-produit, et une section inférieure (10) ;
la mise en forme d'une tête de soupape (12) à partir de la section inférieure (10) ;
l'étirement de la paroi annulaire (6) dans une direction axiale par formage, un mandrin étant inséré dans la cavité cylindrique (8) pendant le formage, une surface extérieure du mandrin présentant une structuration ;
la réduction d'un diamètre extérieur de la paroi annulaire (6) par rétreinte sans mandrin afin d'obtenir une tige de soupape (14) du corps de soupape fini (16) ayant un diamètre extérieur (D) prédéfini,
plusieurs mandrins de diamètres différents ayant des diamètres successivement décroissants étant utilisés lors de l'étirement de la paroi annulaire, et au moins le dernier mandrin utilisé présentant une surface extérieure comportant une structuration.

2. Procédé selon la revendication 1, dans lequel la fourniture du demi-produit (4) en forme de godet comprend :
la fourniture d'une ébauche (2) au moins partiellement cylindrique ; et
la mise en forme du demi-produit (4) en forme de godet à partir de l'ébauche (2).

3. Procédé selon la revendication 2, dans lequel la mise en forme du demi-produit (4) en forme de godet est effectuée par un procédé de formage à chaud, en particulier par filage inverse ou par forgeage.

4. Procédé selon l'une des revendications 1 à 3, dans lequel la mise en forme de la tête de soupape (12) est effectuée par un procédé de formage à chaud, en particulier par filage inverse ou par forgeage.

5. Procédé selon l'une des revendications 1 à 4, dans lequel l'étirement de la paroi latérale annulaire (6) est effectué par rétreinte avec mandrin ou par emboutissage et étirage par l'intermédiaire d'un mandrin.

6. Procédé selon l'une des revendications 1 à 5, dans lequel la structuration du mandrin comprend des rainures dans la surface extérieure du mandrin, des élévations séparées les unes des autres sur la surface extérieure du mandrin ou une structuration en nid d'abeille constituée d'élévations et de dépressions sur la surface extérieure du mandrin.

7. Procédé selon l'une des revendications 1 à 6, comprenant en outre :
le remplissage de la cavité cylindrique avec un agent de refroidissement, en particulier du sodium ; et
la fermeture de la tige de soupape.

8. Soupape creuse à géométrie intérieure de la tige optimisée, comprenant un corps de soupape fabriqué au moyen du procédé selon l'une des revendications 1 à 7.
